# EUROPÄISCHE PATENTSCHRIFT

(11) **EP 3 880 545 B1**
(45) Veröffentlichungstag und Bekanntmachung des Hinweises auf die Patenterteilung: **14.12.2022**
(21) Anmeldenummer: 19806158.2
(22) Anmeldetag: 15.11.2019
(51) Int. Cl.: B62D 55/15, B60K 6/387, B60K 6/48, B60K 6/405, F16D 13/24

(54) **KONUSELEMENT ALS KUPPLUNG IM K0-BAURAUM**
CONE ELEMENT ACTING AS A CLUTCH IN A K0 INSTALLATION SPACE
ÉLÉMENT CONIQUE COMME EMBRAYAGE DANS L'ESPACE DE CONSTRUCTION K0

(30) Priorität: 16.11.2018 DE 102018219676
(43) Veröffentlichungstag der Anmeldung: 22.09.2021
(73) Patentinhaber: ZF Friedrichshafen AG, 88046 Friedrichshafen (DE)
(72) Erfinder: GROSSGEBAUER, Uwe, 97250 Erlabrunn (DE); EINENKEL, Steffen, 96170 Priesendorf (DE); ROHM, Axel, 97453 Schonungen (DE); DÖGEL, Thomas, 97720 Nüdlingen (DE); HÖCHE, Tobias, 97461 Hofheim i. UFr. (DE); LORENZ, Daniel, 97688 Bad Kissingen (DE); DREXLMAIER, Thomas, 97080 Würzburg (DE)
(86) Internationale Anmeldenummer: PCT/EP2019/081461
(87) Internationale Veröffentlichungsnummer: WO 2020/099626

(56) Entgegenhaltungen:
- EP-A1- 3 401 565
- WO-A1-2015/126719
- DE-A1-102009 059 944
- DE-A1-102015 201 931
- DE-A1-102019 117 106

## Beschreibung

Die Erfindung betrifft eine Hybridmodul aus einem Verbrennungsmotor sowie einer elektrischen Maschine, wobei eine Trennkupplung, auch als K0 bezeichnet, zwischen Verbrennungsmotor und elektrischer Maschine vorgesehen ist.

Im Stand der Technik sind Hybridmodule mit einer K0 bekannt, wobei die K0 einen großen zusätzlichen Bauraum benötigt, was sich nachteilig auf die Fahrzeugkonstruktion auswirkt. Des Weiteren sind die Lösungen relativ komplex aufgebaut und mit einem hohen Fertigungsaufwand verbunden. Dokument WO2015/126719A1 offenbart ein Hybridmodul mit Ölleitelementen.

Aufgabe der Erfindung ist es ein Hybridmodul bereitzustellen, welches einen gegenüber dem Stand der Technik geringeren Bauraum benötigt, weniger komplex aufgebaut und/oder günstiger herstellbar ist.

Gelöst wird die Aufgabe durch die im folgenden beschriebenen Ausführungsformen.

Erfindungsgemäß ist eine Ölführung eines Hybridmoduls für ein Fahrzeug, welches in einem Antriebsstrang zwischen einer Antriebseinheit, insbesondere einem Verbrennungsmotor, und einem Abtrieb angeordnet ist, wobei eine elektrische Maschine vorgesehen ist und ein Rotor der elektrischen Maschine mit dem Abtrieb verbunden ist, wobei zwischen der Antriebseinheit und der elektrischen Maschine eine Kupplung vorgesehen ist, dadurch gekennzeichnet, dass die Kupplung Ölleitelemente aufweist, um die elektrische Maschine mit Kühlöl zu versorgen, dass die Kupplung als eine Konuskupplung ausgebildet ist, dass die Konuskupplung zumindest einen Außenreibring und einen Zwischenreibring aufweist, dass der Außenreibring mit dem Rotor verbunden ist, und dass der Konus der Konuskupplung in geöffnetem Zustand eine Ölführung zu einem axialen Ende des Rotors ausbildet, und dass am Außenreibring Bohrungen (44) an der verjüngten Seite des Konus vorgesehen sind, um Kühlöl an das andere axiale Ende des Rotors zu leiten.

Ölführungen gemäß Ausführungsformen sind dadurch gekennzeichnet, dass der Außenreibring (ARR) einteilig mit einem Rotorträger des Rotors der elektrischen Maschine ausgebildet ist.

Ausführungsformen einer Ölführung sind dadurch gekennzeichnet, dass ein Sicherungsring zur axialen Positionierung der Kupplung gegenüber dem Rotor in radialer Richtung überstehen, um als Stauelement für Kühlöl zu dienen.

Ausführungsformen einer Ölführung sind dadurch gekennzeichnet, dass eine Rückstellfeder der Kupplung als Tellerfeder ausgebildet ist, und dass Öffnungen am Innendurchmesser der Tellerfeder zur Ölsteuerung vorgesehen sind.

Ölführungen gemäß Ausführungsformen sind dadurch gekennzeichnet, dass ein Ölleitblech an der Kupplung vorgesehen ist.

Vorteilhafte Ausführungsformen einer Ölführung sind dadurch gekennzeichnet, dass das Ölleitblech am Innenreibring (IRR) oder Zwischenreibring (ZRR) eingehängt oder angeschweißt ist.

Ein weiterer Aspekt der Erfindung ist ein Hybridmodul mit einer Ölführung gemäß einer der beschriebenen Ausführungsformen.
- Fig. 1: Bauraum mit K0 als nasse Lamellenkupplung NO
- Fig. 2: Ausführung Konus-KO mit linkssteigendem Konus als NO
- Fig. 3: Ausführung Konus-KO mit linkssteigendem Konus als NO - Tellerfeder
- Fig. 4: Ausführung Konus-KO mit linkssteigendem Konus als NC
- Fig. 5: Ausführung Konus-KO mit linkssteigendem Konus als NC - Tellerfeder
- Fig. 6: Ausführung Konus-KO mit rechtssteigendem Konus als NO
- Fig. 7: Ausführung Konus-KO mit rechtssteigendem Konus als NO - ARR Blechdesign
- Fig. 8: Ausführung Konus-KO mit rechtssteigendem Konus als NO mit nur einer Reibfläche - Minimaldesign ohne Ausgleichsraum
- Fig. 9: Ausführung Konus-KO mit rechtssteigendem Konus als NC
- Fig. 10: Ausführung Konus-KO mit linkssteigendem Konus als NO mit nur einer Reibfläche - Minimaldesign ohne Ausgleichsraum
- Fig. 11: Ausführung Konus-KO mit rechtssteigendem Konus als NO - ZRR mit Torsionsdämpfer verbunden

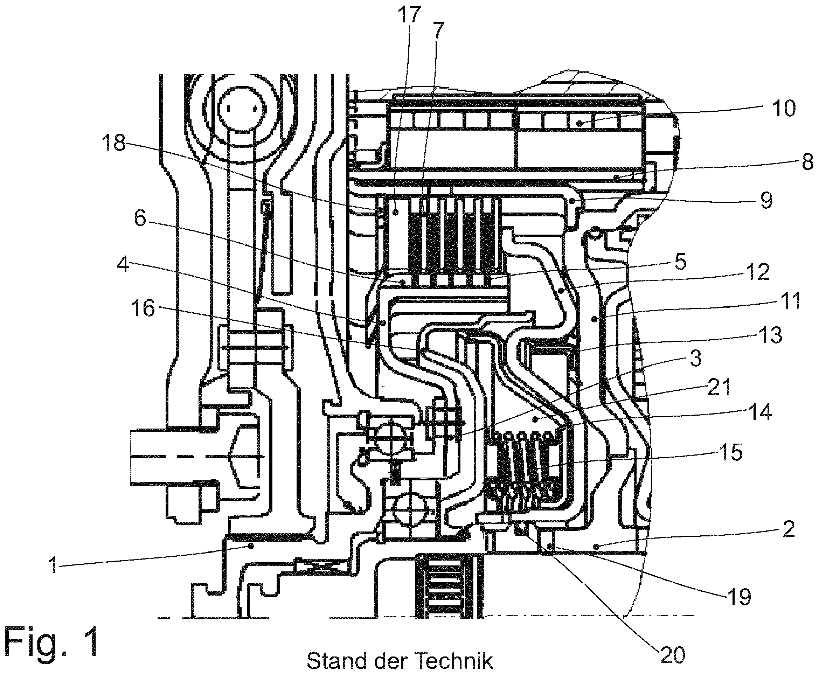

Fig.1 zeigt die Konstruktion einer nassen Lamellenkupplung als K0 und stellt den Stand der Technik dar. Der Innenlamellenträger (ILT) Pos.4 ist über eine Nietverbindung Pos.3 mit dem Eingangsteil Pos.1 verbunden. Mit dem ILT sind die Innenlamellen Pos.5 über eine Verzahnung Pos.6 drehfest aber axial verschiebbar verbunden. Die elektrische Maschine (EM) Pos.10 ist mit dem Rotorträger Pos.8 am Außenlamellenträger (ALT) Pos.9 und dieser wiederum am Wandlerdeckel Pos.11 befestigt. Hier dargestellt als Schweißverbindungen.

Der ALT übernimmt somit neben der Trägerfunktion der Außenlamellen Pos.7 auch die Anbindungsfunktion der EM am Wandlerdeckel und bildet somit einen Teil des Rotorträgers. Die Lamellenkupplung ist als "Normally Open" (NO) System ausgeführt und muss zur Momentenübertragung über einen Betätigungskolben Pos.12 aktiv zugedrückt werden. Durch die auf die Lamellen wirkende Normalkraft entsteht über den Reibwert µ an den Belägen eine Reibkraft, die entsprechend zur Stärke der Anpresskraft die Übertragung einer Umfangskraft und damit, abhängig vom mittleren Reibradius der Lamellen, die Übertragung eines Drehmomentes ermöglicht.

Die Kraft am Kolben entsteht durch Öldruck, der auf die Kolbenfläche wirkt. Der Druckraum wird zwischen Wandlerdeckel, Kolben, und Nabe Pos.30 gebildet. Die Abdichtung des Druckraumes radial außen erfolgt über die Kolbendichtung Pos.13 und radial innen über einen Wellendichtring Pos.20. Die Ölversorgung erfolgt über einen gesteuerten Ölkanal Pos.19. Wird Druck aufgebaut verschiebt sich der Kolben gegen die Federkraft der Rückstellfeder Pos.15 nach links und drückt auf die rechte Außenlamelle. Diese verschiebt sich über die Verzahnung im ALT nach links und drückt das Lamellenpaket zusammen. Das Lamellenpaket besteht aus abwechselnder Anordnung von Außen- und Innenlamellen. Die Abstützung der Kraft erfolgt über eine dickere Außenlamelle, der sogenannten Endlamelle Pos. 17, auf einen Sicherungsring (Sprengring) Pos.18, der in einer Nut des Außenlamellenträgers sitzt. Da der ALT fest mit dem Wandlerdeckel verbunden ist schließt sich hier der Kraftfluss. Um die Verformungen der Bauteile möglichst gering zu halten muss in der Auslegung auf eine ausreichende Steifigkeit geachtet werden. Der Wandlerdeckel ist mit der Nabe verschweißt und bildet den Abtrieb Pos.2. Um den Drehzahleinfluss auf den Öldruck im stets gefüllten Kolbenraum zu kompensieren, ist ein Ausgleichsraum Pos.21 vorhanden. Dieser wird aus einem Dichtblech Pos.16 und einer Dichtung Pos.14 gebildet. Der Ausgleichsraum wird ebenfalls über einen Ölkanal mit Öl versorgt. Dieser ist allerdings nicht mit Druck beaufschlagt. Zudem besitz der Außgleichsraum nur eine Abdichtung radial außen auf Höhe der Kolbendichtung. Radial innen sind Überströmkanäle vorhanden, um das Öl bei einer Kolbenbetätigung zu verdrängen. Wenn der Öldruck im Ölraum abgeschaltet wird kann die Rückstellfeder das Öl im Kolbenraum durch den Ölkanal Pos.19 zurückdrücken.

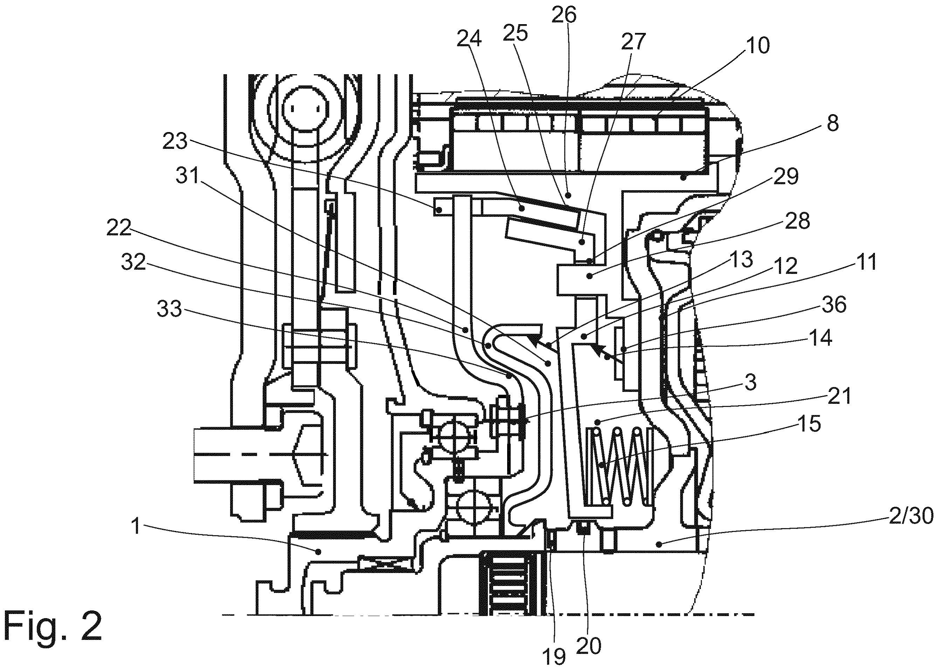

Fig.2 zeigt eine Ausführung der K0 als Konuskupplung mit linkssteigendem Konus im NO Design. Im Vergleich zur Lamellenkupplung in Fig.1 sind hier der Kolbenraum und der Ausgleichsraum Pos.21 vertauscht. Demzufolge müssen auch die Ölkanäle vertauscht werden. Die Kolbenbetätigung erfolgt hier nach rechts.

Die Anbindung des Konuselementes am Eingangsteil Pos.1 erfolgt über ein Trägerblech Pos.22, das z.B. vernietet oder geschweißt wird oder in sonstiger Weise drehfest verbunden und gegen axiales Verschieben gesichert ist. Dieses Trägerblech besitzt Aussparungen, in die die Klauen Pos.23 des Zwischenreibrings (ZRR) Pos.24 eingreifen. Über diese Klauensteckverbindung wird zum einen das Drehmoment übertragen und zum anderen ein radialer und axialer Ausgleich ermöglicht. Für einen radialen Toleranzausgleich muss Spiel zwischen den Klauen und den Aussparungen sowohl in Umfangsrichtung als auch in radialer Richtung vorhanden sein.

Alternativ zu einer spielbehafteten Klauensteckverbindung, kann ein Toleranzausgleich auch durch die Anbindung des Konuselementes an einen vor- oder nachgeschalteten Federsatz (Torsionsdämpfer) erfolgen. Der Torsionsdämpfer lässt konstruktionsbedingt durch Trennung des Eingangs- und Ausgangsteils über ein elastisches Federelement radiale und axiale Relativbewegung zwischen Ein- und Ausgangsteil zu. Um die Unwucht möglichst gering zu halten ist es zweckmäßig die jeweils leichtere Seite des Konuselementes (ZRR) und des Dämpfers für den Toleranzausgleich (keine Lagerung) zu verwenden.

Der ZRR wird bei Betätigung des Kolbens Pos.12 zwischen dem Außenreibring (ARR) Pos.26 und dem Innenreibring (IRR) Pos.27 geklemmt. Über den Konuswinkel wird die Anpresskraft des Kolbens übersetzt, so dass die Normalkraft auf den Reibbelag Pos.25 verstärkt wird. Hierdurch kann bei gleicher Anpresskraft, gleichem mittleren Reibradius und gleichen Reibverhältnissen (Reibwert) eine höhere Reibkraft im Vergleich zu einer Lamellenkupplung erzeugt werden, weshalb in dieser Anwendung zwei Reibflächen ausreichen. Der größere Betätigungsweg im Vergleich zu einer Lamellenkupplung wird durch die geringere notwendige Anzahl an Reibflächen und damit einhergehendem geringeren Lüftspiel kompensiert. Die Begrenzung auf zwei Reibflächen ermöglicht die Einsparung der Verzahnung des Innen- und Außenlamellenträgers. Es muss lediglich eine drehfeste Verbindung Pos.28 zwischen Innen- und Außenreibring mit axialer Verschiebemöglichkeit dargestellt werden.

Der ARR wird in dieser Darstellung durch einen Teil des Rotorträgers Pos.8 gebildet. Alternativ kann der Außenreibring auch ein separates Teil sein, dass mit dem Rotorträger drehfest verbunden und axial gesichert ist.

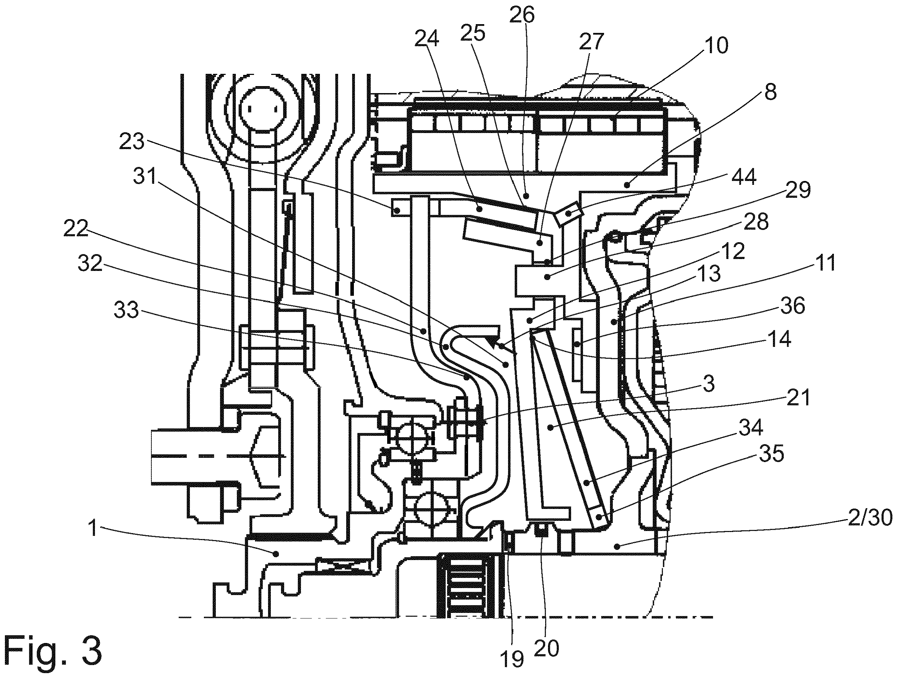

Der IRR ist hier ein Teil des Betätigungskolbens Pos.12. Durch eine feste Anbindung des Innen- oder Außenreibrings am Kolben kann auf eine Separierungsfeder zwischen Innen- und Außenreibring verzichtet werden. Die Separierung und die Rückstellung des Kolbens wird von der Rückstellfeder Pos.15 übernommen. Diese kann wie dargestellt als Schraubendruckfeder- (SDF) Paket oder als Tellerfeder Pos.34, wie in Fig.3 gezeigt, ausgeführt sein.

Die Verdrehsicherung Pos.28 zwischen Innen- und Außenreibring ist hier durch einen Bolzen Pos.28 oder vergleichbares Formschlusselement am Rotorträger sichergestellt, der in Aussparungen Pos.29 am Innenreibring eingreift und eine axiale Verschiebung zulässt. Alternativ hierzu kann auch eine Anbindung des IRR am ARR bzw. Rotorträger über:
- Tangentialblattfedern
- eine Schiebeverzahnung (z.B. Keilwellenverzahnung) zwischen Kolben und Nabe.
- eine Tellerfeder (als Rückstellfeder), die verdrehsicher (Formschluss) sowohl am IRR und an der Nabe oder Wandlerdeckel angebracht ist und somit Drehmoment übertragen kann
erfolgen.

Die Nabe ist fest mit dem Wandlerdeckel verbunden, der den Abtrieb darstellt. Der Rotorträger ist ebenfalls fest mit dem Wandlerdeckel verbunden. Hier ist diese Verbindung als Nietverbindung Pos.36 über einen angespritzten Niet am Wandlerdeckel dargestellt. Die Nietköpfe können auch komplett im Rotorträgerblech versenkt werden.

Für eine Kolbenbetätigung wird Öldruck in den Kolbenraum Pos.31 über den gesteuerten Ölkanal Pos.19 eingeleitet. Dieser bewirkt über die Kolbenfläche eine Kraft, die gegen die Rückstellfeder Pos.15 arbeitet, den Kolben und damit den IRR nach rechts verschiebt und den ZRR zwischen IRR und ARR klemmt. Der Kolbenraum wird durch das Dichtblech Pos.32, den Kolben und der Nabe Pos.30 gebildet. Hierbei kommen eine statische Dichtung zwischen Dichtblech und Nabe, sowie zwei Bewegungsdichtungen, Kolbendichtung Pos.13 zwischen Dichtblech und Kolben und zwischen Kolben und Nabe Pos.20, zum Einsatz.

Der Ausgleichsraum wird wie dargestellt durch Kolben, Nabe und Wandlerdeckel gebildet. Eine Dichtung Pos.14 dichtet den Ausgleichsraum nach radial außen ab. Bei Verwendung einer Tellerfeder als Rückstellfeder kann der Ausgleichraum zwischen Kolben, Nabe und Tellerfeder gebildet werden. Die Dichtung Pos.14 muss dann zwischen Tellerfeder und Kolben auf gleichem Durchmesser wie die Kolbendichtung angebracht werden.

Die Ölführung des Kühlölstromes kann bei einer Variante mit Tellerfeder (Fig.3) als Rückstellfeder durch Öffnungen am Innendurchmesser der Tellerfeder Pos.35 zwischen Wandlerdeckel und Tellerfeder nach radial außen geführt und somit direkt auf den Konus geleitet werden. Das Konuselement kann auch direkt zur Ölsteuerung genutzt werden. So könnte beispielsweise das Kühlöl im geöffneten Kupplungszustand so verteilt werden, dass ein Teil durch den Konus nach links läuft und der andere Teil durch eine Bohrung Pos.44 nach rechts. Im geschlossenen Zustand dichtet der Konus den Ölfluss nach links ab und das gesamte Öl wird durch die Bohrung Pos.44 nach rechts geleitet.

Diese Anbindungsvariante der Konuskupplung bietet die Möglichkeit eines zusätzlichen parallelen Reibschlusses und damit die Erhöhung des übertragbaren Momentes. Durch entsprechende Auslegung der Steifigkeit des Dichtbleches Pos.32 kann ab einem bestimmten Öldruck ein zusätzlicher Reibkontakt zwischen Dichtblech Pos.32 und Trägerblech Pos.22 erfolgen. Hierzu muss das Dichtblech Pos.32 drehfest mit der Nabe verbunden sein.

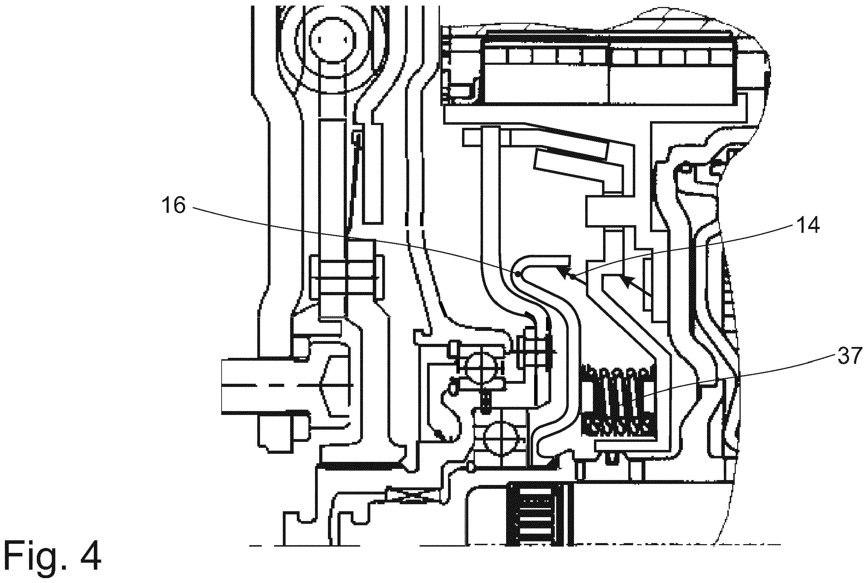

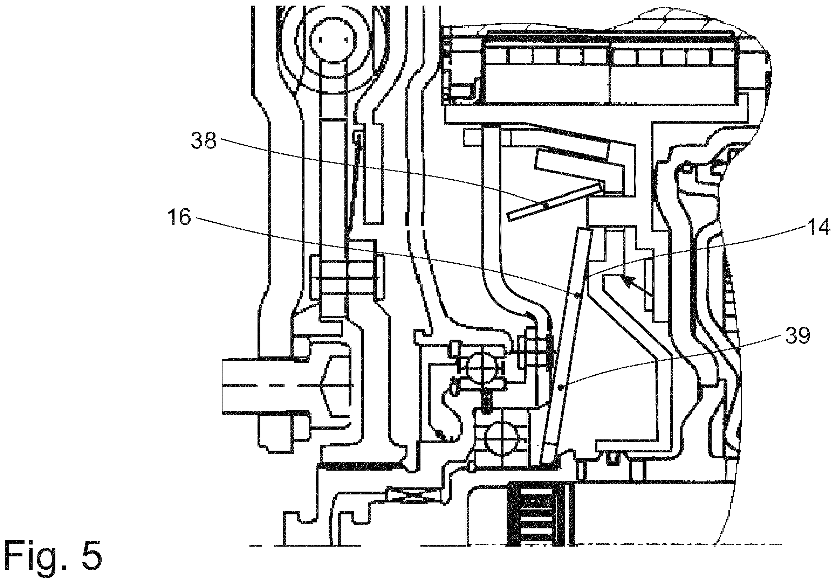

Fig.4 zeigt denselben Aufbau der Konuskupplung als "Normally Closed" (NC) System. Hierbei sind der Ausgleichsraum und der Druckraum wieder vergleichbar zu Fig.1 angeordnet. Das dargestellte Federpaket Pos.37 dient hier nicht der Rückstellung, sondern muss die maximale erforderliche Schließkraft aufbringen. Diese Schließfeder kann auch als Tellerfeder Pos.39, wie in Fig.5 gezeigt, ausgeführt sein. Ein Vorteil hierbei ist die Abstützung der Tellerfeder radial weit innen am Dichtblech Pos.16 des Ausgleichsraumes. Dadurch muss das Dichtblech nicht so massiv ausgelegt werden. Es könnte sogar ganz auf das Dichtblech verzichtet werden, wenn die Tellerfeder Pos.39 diese Funktion mit übernimmt und wie schon oben beschrieben die Abdichtung des Ausgleichsraumes Pos.14 zwischen Tellerfeder und Kolben erfolgt.

Die Kühlölführung zum Konus kann über ein Ölleitblech Pos.38 (Fig.5) erfolgen, dass z.B. in den IRR eingehängt oder angeschweißt ist.

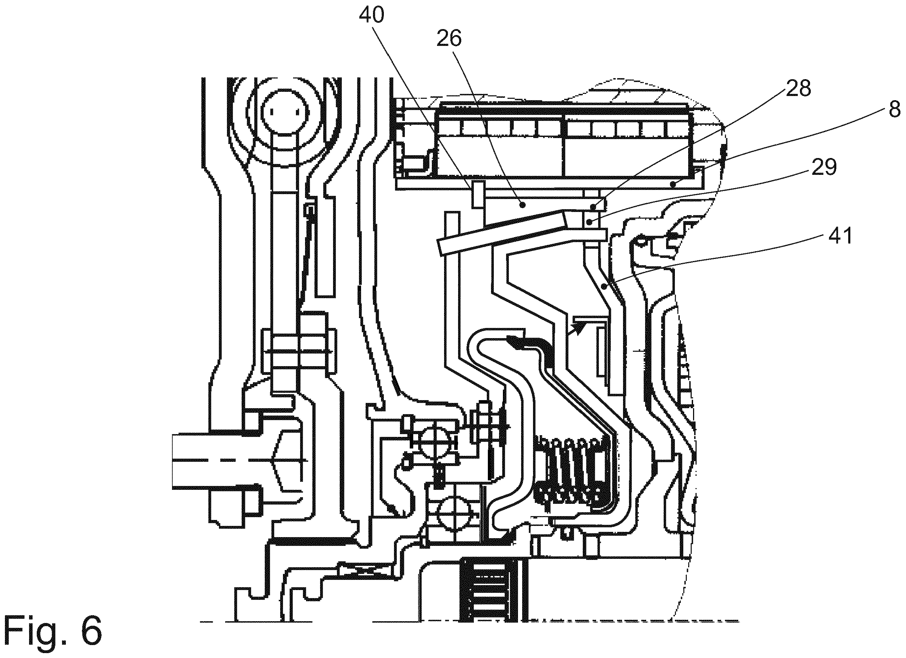

Fig.6 zeigt eine Ausführungsvariante mit rechtssteigendem Konus. Hierdurch dreht sich im Vergleich zum linkssteigenden Konus die Betätigungsrichtung um. Die dargestellte Variante zeigt ein NO Design. Der Druckraum ist rechts und der Ausgleichsraum links.

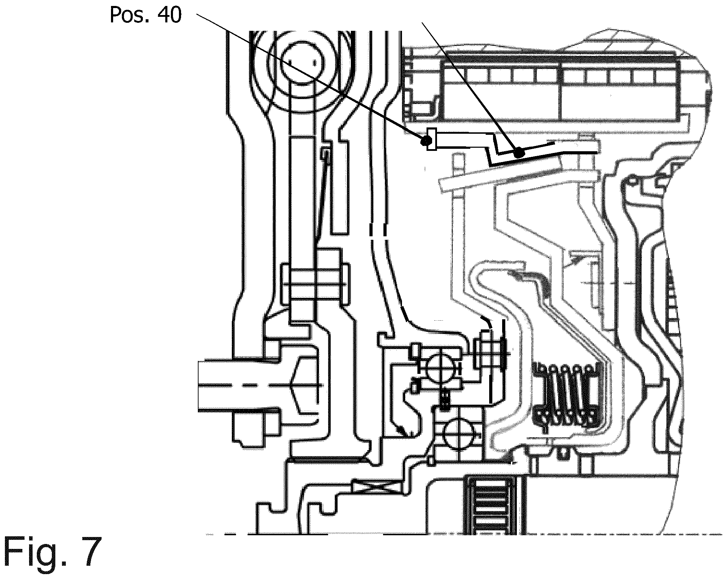

Bei Kolbenbetätigung wird der Kolben mit IRR nach links gedrückt und klemmt den ZRR zwischen IRR und ARR. Der ARR Pos.26 stützt sich axial über einen Sicherungsring Pos.40 ab, der im Rotorträger Pos.8 eingelegt ist. Eine alternative Ausführungsform des ARR im Blechdesign ist in Fig.7 dargestellt. Der Rotorträger ist mit einem Trägerblech Pos.41 z.B. verschweißt, dass wiederum am Wandlerdeckel z.B. angenietet ist. Das Trägerblech Pos.41 beinhaltet Aussparungen Pos.29 in die sowohl Klauen Pos.28 des ARR als auch des IRR formschlüssig eingreifen und gegen Verdrehung sichern. Eine axiale Verschiebbarkeit bleibt gewährleistet. Diese Steckverbindung sollte wie schon weiter oben beschrieben auf möglichst großem Durchmesser erfolgen um die Reibkräfte, die einer axialen Verschiebung unter Moment entgegenwirken, klein zu halten.

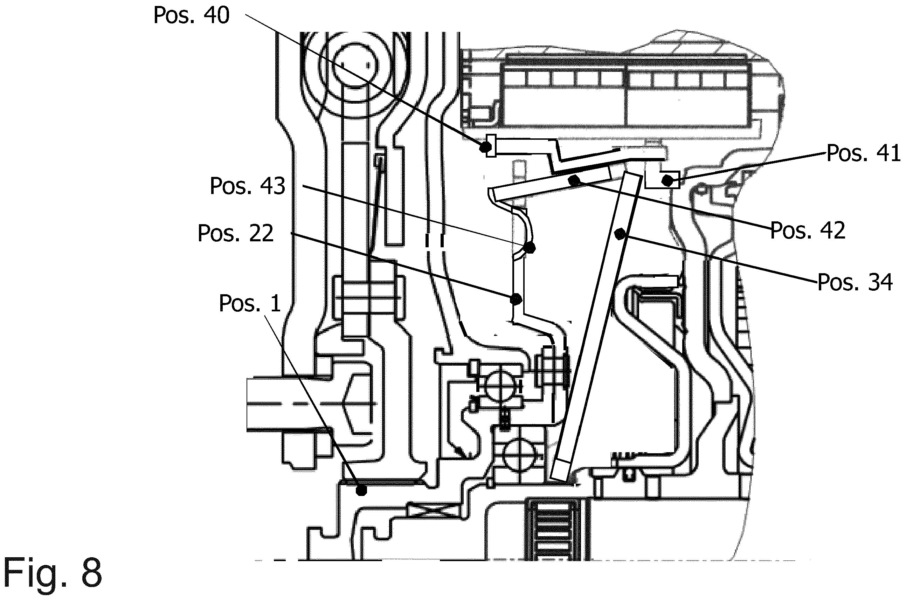

Fig.8 zeigt eine Ausführung der Konus-KO mit rechtssteigendem Konus als NO Design, wie Fig.6, mit nur einer Reibfläche und ohne Ausgleichsraum und stellt ein Minimaldesign für kleine Drehmomente dar. Das eingeleitete Moment wir nicht mehr über einen ZRR auf die zwei Pfade ARR und IRR übertragen. Ein ZRR ist hier nicht vorhanden. Der bisherige ZRR übernimmt die Funktion des IRR Pos.42. Der Kolben drückt hier auf die Rückstellfeder die als Tellerfeder Pos.34 ausgeführt ist. Da in diesem Beispiel auf einen Ausgleichsraum verzichtet wurde, muss die Rückstellfeder so stark ausgelegt sein, dass bei Maximaldrehzahl der entstehende Öldruck im Kolbenraum kein Schließen der Kupplung bewirkt. Die Tellerfeder Pos.34 übernimmt hier zudem die Funktion der Kraftübertragung vom Kolben auf den IRR Pos.42. und stellt einen Hebelmechanismus dar. Über die Hebelverhältnisse wird die Betätigungskraft des Kolbens auf den IRR untersetzt. Deshalb ist es vorteilhaft, wenn die Anbindung des Kolbens an die Tellerfeder möglichst weit radial außen erfolgt. Bei einer Anbindung des Kolbens auf einem größeren Durchmesser als der IRR würde eine Übersetzung erfolgen. Allerdings steht dies im Gegensatz zu einem möglichst großen Reibradius des Konus.

Da die Ausführung mit nur einer Reibfläche in diesem Ausführungsbeispiel keine direkte Kopplung zwischen Kolben und IRR zulässt, muss die Separierung der Reibflächen im drucklosen Zustand (NO) durch eine zusätzliche Feder Pos.43 sichergestellt werden. Auch hier stützt sich der ARR über einen Sicherungsring Pos.40 am Rotorträger ab. Der Sicherungsring gewährleistet bei einer Montage nach rechts die Montierbarkeit der Kupplung. Das Trägerblech Pos.22 wird mit voreingelegter Separierungsfeder Pos.43 am Eingangsteil Pos.1 montiert, z.B. angenietet. Tellerfeder, IRR und ARR werden getriebeseitig eingelegt und über den Sicherungsring Pos.40 gesichert. Die Kupplung wird beim Zusammenbau Getriebe an Motor komplettiert, indem der IRR Pos.42 in die Aussparungen am Trägerblech Pos.22 eingesteckt wird. Hierbei stellen die Separierungsfedern Pos.43 das Lüftspiel zwischen IRR und ARR sicher. Um Schleppmomente im geöffneten Zustand zu verhindern, sollte darauf geachtet werden, dass zwischen Tellerfeder und IRR im geöffneten Zustand ein zweites Lüftspiel vorhanden ist.

Der Rotorträger ist in diesem Ausführungsbeispiel mit dem Trägerblech Pos.41 und das Trägerblech wiederum mit dem Wandlerdeckel verschweißt.

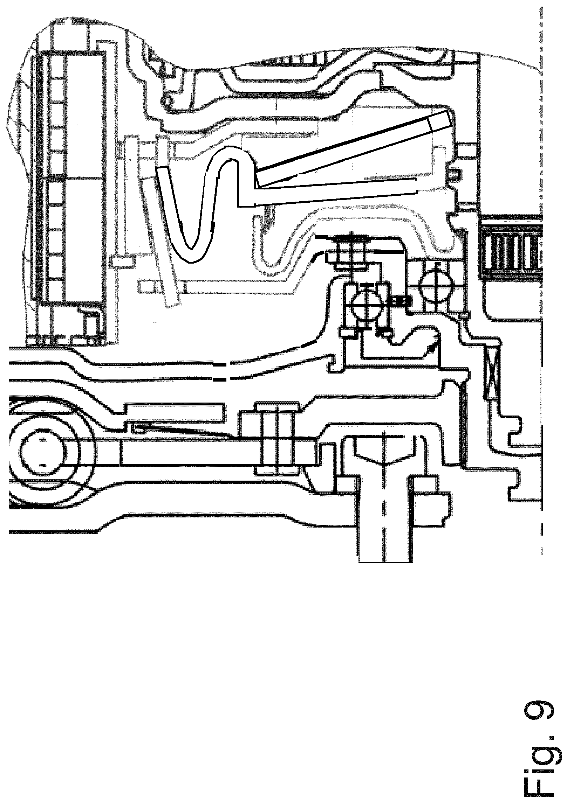

Fig.9 zeigt eine Ausführung der Konus-KO mit rechtssteigendem Konus als NC.

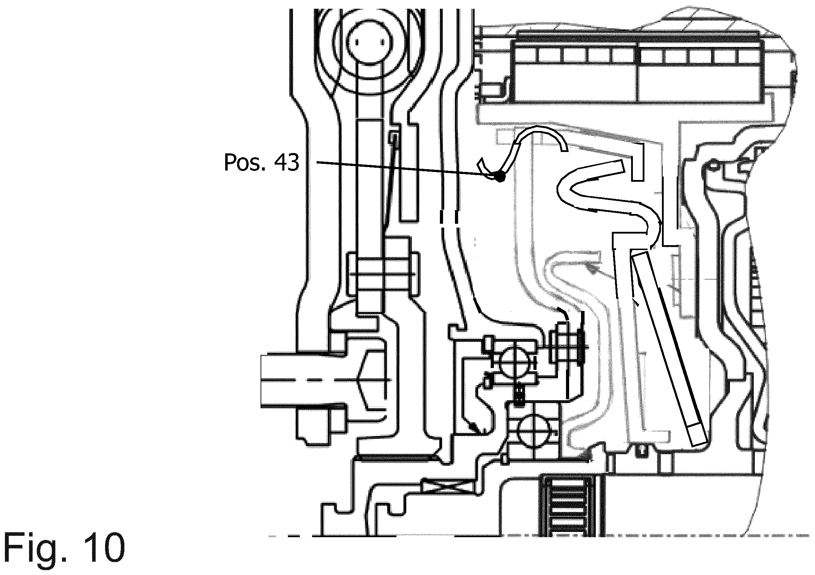

Fig.10 zeigt eine Ausführung der Konus-KO mit linkssteigendem Konus als NO mit nur einer Reibfläche. Der Ausgleichsraum kann hier durch die Tellerfeder mit zusätzlichem Dichtelement gebildet werden oder, wie in Fig.8 dargestellt, komplett weggelassen werden. Für die Separierung der Reibflächen muss ebenfalls eine zusätzliche Feder Pos.43 verwendet werden. Bei der Montage ist darauf zu achten, dass die Separierungsfeder am IRR vormontiert ist und beim Zusammenbau Getriebe an Motor der IRR in die Aussparungen am Trägerblech Pos.22 eingeschoben wird, wobei die Separierungsfedern am Trägerblech einrasten und den IRR Richtung Trägerblech ziehen.

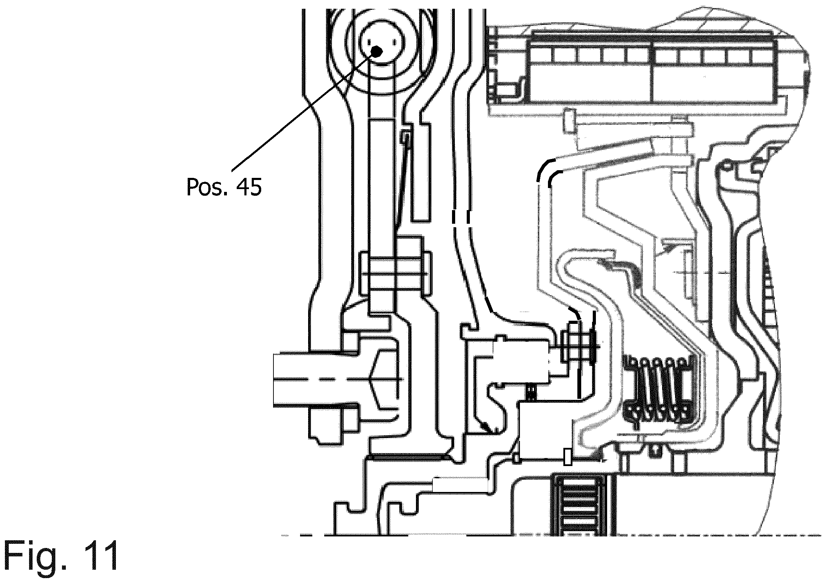

In Fig. 11 ist der ZRR über den Torsionsdämpfer gehalten wird und durch den Federsatz des Torsionsdämpfers kann ein Toleranzausgleich sowohl in axialer wie auch radialer Richtung erfolgen. Der Torsionsdämpfer kann in weiteren Ausführungsformen jedoch auch an anderer Stelle angeordnet sein. Alternativ kann der Toleranzausgleich auch durch einen weiteren Torsionsdämpfer an einer anderen Stelle vorgenommen werden.

Auf dem ZRR sind Reibbeläge Pos.25 aufgeklebt. Eventuell können diese Reibbeläge auch einfach nur zwischen ZRR und IRR sowie ZRR und ARR eingelegt werden. Dann muss allerdings die Steifigkeit und Festigkeit ausreichend groß sein, um auftretende Zug- und Druckkräfte beim Schlupfzustand (Zustand beim Schließen mit Differenzdrehzahl zwischen ZRR und Innen-und Außenreibring vom ersten Reibkontakt bis Kupplung vollständig synchronisiert und geschlossen ist) zu ertragen.

Ein radialer Toleranzausgleich (Versatz / Winkelfehler) kann, alternativ zu einer spielbehafteten Klauensteckverbindung, auch durch die Anbindung des Konuselementes an einen vor- oder nachgeschalteten Federsatz (Torsionsdämpfer) erfolgen. Der Torsionsdämpfer lässt konstruktionsbedingt durch Trennung des Eingangs- und Ausgangsteils über ein elastisches Federelement radiale und axiale Relativbewegung zwischen Ein- und Ausgangsteil zu. Um die Unwucht möglichst gering zu halten ist es Zweckmäßig die jeweils leichtere Seite des Konuselementes (ZRR) und des Dämpfers für den Toleranzausgleich (keine Lagerung) zu verwenden.

Ist dies nicht erwünscht muss der Freiheitsgrad über entsprechende Lagerungskonzepte eingeschränkt werden.

Entfall der Verzahnung des Außen- und Innenlamellenträgers da diese Kupplung mit nur 2 Reibflächen und damit mit nur zwei Momentpfaden auskommt. Die Kopplung von Innen- und Außenreibring erfolgt über:
o einen Formschluss zwischen Rotorträger und IRR, der eine drehfeste Verbindung mit axialer Verschiebemöglichkeit darstellt - idealerweise auf großem Durchmesser um Reibkräfte gering zu halten
o Tangentialblattfedern, die in Umfangsrichtung Zugrichtung Moment übertragen können und axiale Verschiebung durch Verformung zulassen. Hierdurch entstehen keine zusätzlichen Reibkräfte im Kontakt, die einer Betätigung entgegen wiken. Die Schubrichtung kann zusätzlich über Anschläge begrenzt werden um die Tangentialblattfedern vor Ausknicken zu schützen
o Einen Formschluss in Form einer Schiebeverzahnung zwischen Kolben und Nabe, wobei die Nabe fest mit dem Wandlerdeckel und dieser fest mit dem Rotorträger / ARR verbunden ist - Nachteil ist der kleine Anbindungsdurchmesser und damit verbundene hohe Reibkräfte
o eine Tellerfeder (als Rückstellfeder), die verdrehsicher (Formschluss) sowohl am IRR und an der Nabe oder Wandlerdeckel angebracht ist und somit Drehmoment übertragen kann

ARR ist Teil des Rotorträgers oder als separates Teil ausgeführt, dass in den Rotorträger möglichst spielfrei eingelegt und drehfest und axial gesichert ist.

IRR als Teil des Betätigungskolbens ausgeführt.

Zusätzlicher paralleler Reibkontakt zwischen Dichtblech und Trägerblech um das übertragbare Moment zu erhöhen.

Tellerfeder (egal ob Rückstellfeder oder Schließfeder) übernimmt Dichtblechfunktion.

Dichtung für Ausgleichsraum ist an Tellerfeder angebracht bzw. eingelegt.

Tellerfeder mit Bohrungen am Innendurchmesser für Ölführung Kühlölstrom und für Überströmung bei Kolbenbetätigung

Konuselement wird zur Steuerung bzw. Lenkung des Kühlölstromes genutzt. Konus auf = Leitung offen / Konus zu = Leitung dicht

Tellerfeder übernimmt Funktion eines Hebels zur Kraftübertragung vom Kolben auf IRR, wie in Fig.8 gezeigt. Je nach Lage der Kraftangriffspunkte können verschiedene Unter- oder Übersetzungen eingestellt werden.

Separierungsfeder ist bei Ausführung mit nur einer Reibfläche beispielsweise im Trägerblech eingehängt.

Zwischenreibring ist nicht als geschlossener Ring ausgeführt, sondern segmentiert um Toleranzen auszugleichen.

Reibbeläge werden nicht aufgeklebt, sondern nur eingelegt. Durch die konische Form kann der Belag nicht herauswandern. Vorteilhaft ist hierbei die Einsparung der Klebbearbeitung. Jedoch muss in derartigen Ausführungsformen folgendes berücksichtigt werden:
∘ Der Reibbelag muss steif genug sein, dass er bei Kontakt keine Falten wirft.
∘ Der Reibbelag muss eine ausreichende Festigkeit besitzen, dass er nicht zerreißt.
∘ Das Schleppmoment der Kupplung im geöffneten Zustand könnte durch Kontakt des Reibbelag zwischen Außen- und Innenreibring ansteigen.

Minimalausführung für kleine Drehmomente Konuskupplung mit nur einer Reibfläche Fig.8 + 10.

### Bezugszeichen

- Pos.1: Eingangsteil / Antrieb
- Pos.2: Ausgangsteil / Abtrieb
- Pos.3: Verbindungselement (hier Niet)
- Pos.4: Innenlamellenträger (ILT)
- Pos.5: Innenlamelle
- Pos.6: Verzahnung ILT
- Pos.7: Außenlamelle
- Pos.8: Rotorträger
- Pos.9: Außenlamellenträger (ALT)
- Pos.10: E-Maschine
- Pos.11: Wandlerdeckel
- Pos.12: Betätigungskolben
- Pos.13: Kolbendichtung
- Pos.14: Abdichtung Ausgleichsraum
- Pos.15: Rückstellfeder Schraubendruckfeder- (SDF) Paket
- Pos.16: Dichtblech - Ausgleichsraum
- Pos.17: Endlamelle
- Pos.18: Sicherungsring
- Pos.19: gesteuerter Ölkanal
- Pos.20: Wellendichtring
- Pos.21: Ausgleichsraum
- Pos.22: Trägerblech ZRR
- Pos.23: Klauen / Steckverbindung
- Pos.24: Zwischenreibring (ZRR)
- Pos.25: Reibbelag
- Pos.26: Außenreibring (ARR)
- Pos.27: Innenreibring (IRR)
- Pos.28: drehfeste Verbindung / Bolzen
- Pos.29: Aussparungen / Steckverbindung
- Pos.30: Nabe
- Pos.31: Kolbenraum
- Pos.32: Dichtblech - Kolbenraum
- Pos.33: zusätzliches Reibelement / Reibkonus
- Pos.34: Rückstellfeder Tellerfeder
- Pos.35: Öffnung für Kühlöl
- Pos.36: Verbindung ROT mit Wandlerdeckel
- Pos.37: Schließfeder SDF-Paket
- Pos.38: Ölleitblech
- Pos.39: Schließfeder Tellerfeder
- Pos.40: Sicherungsring
- Pos.41: Trägerblech Rotorträger
- Pos.42: IRR bei Ausführung mit nur einer Reibfläche
- Pos.43: Separierungsfeder
- Pos.44: Kühlölbohrung - Rotorträger
- Pos.45: Torsionsdämpfer

## Patentansprüche

1. Ölführung eines Hybridmoduls für ein Fahrzeug, welches in einem Antriebsstrang zwischen einer Antriebseinheit, insbesondere einem Verbrennungsmotor, und einem Abtrieb angeordnet ist, wobei eine elektrische Maschine (10) vorgesehen ist und ein Rotor der elektrischen Maschine (10) mit dem Abtrieb verbunden ist, wobei zwischen der Antriebseinheit und der elektrischen Maschine (10) eine Kupplung vorgesehen ist, **dadurch gekennzeichnet, dass** die Kupplung Ölleitelemente (35, 38, 44) aufweist, um die elektrische Maschine (10) mit Kühlöl zu versorgen,
dass die Kupplung als eine Konuskupplung ausgebildet ist, dass die Konuskupplung zumindest einen Außenreibring (26 / ARR) und einen Zwischenreibring (24 / ZRR) aufweist, dass der Außenreibring (26 / ARR) mit dem Rotor verbunden ist, und dass der Konus der Konuskupplung in geöffnetem Zustand eine Ölführung zu einem axialen Ende des Rotors ausbildet,
und dass am Außenreibring (26 / ARR) Bohrungen (44) an der verjüngten Seite des Konus vorgesehen sind, um Kühlöl an das andere axiale Ende des Rotors zu leiten.

2. Ölführung nach Anspruch 1, **dadurch gekennzeichnet, dass** der Außenreibring (26 / ARR) einteilig mit einem Rotorträger des Rotors der elektrischen Maschine (10) ausgebildet ist.

3. Ölführung nach einem der vorangegangenen Ansprüche, **dadurch gekennzeichnet, dass** ein Sicherungsring (40) zur axialen Positionierung der Kupplung gegenüber dem Rotor in radialer Richtung überstehen, um als Stauelement für Kühlöl zu dienen.

4. Ölführung nach einem der vorangegangenen Ansprüche, **dadurch gekennzeichnet, dass** eine Rückstellfeder der Kupplung als Tellerfeder (34) ausgebildet ist, und dass Öffnungen (35) am Innendurchmesser der Tellerfeder (34) zur Ölsteuerung vorgesehen sind.

5. Ölführung nach einem der vorangegangenen Ansprüche, **dadurch gekennzeichnet, dass** ein Ölleitblech (38) an der Kupplung vorgesehen ist.

6. Ölführung nach Anspruch 5, **dadurch gekennzeichnet, dass** das Ölleitblech (38) am Innenreibring (27 / IRR) oder Zwischenreibring (24 / ZRR) eingehängt oder angeschweißt ist.

7. Hybridmodul mit einer Ölführung gemäß einem der vorangegangenen Ansprüche.

## Claims

1. Oil conducting means of a hybrid module for a vehicle, which hybrid module is arranged in drive train between a drive unit, in particular an internal combustion engine, and an output, an electric machine (10) being provided, and a rotor of the electric machine (10) being connected to the output, a clutch being provided between the drive unit and the electric machine (10), **characterized in that** the clutch has oil conducting lines (35, 38, 44), in order to supply the electric machine (10) with cooling oil, **in that** the clutch is configured as a cone clutch, **in that** the cone clutch has at least one outer friction ring (26 / ARR) and one intermediate friction ring (24 / ZRR), **in that** the outer friction ring (26 / ARR) is connected to the rotor, and **in that** the cone of the cone clutch configures an oil conducting means to an axial end of the rotor in the open state, and **in that** bores (44) ae provided on the outer friction ring (26 / ARR) on the tapered side of the cone, in order to conduct oil to the other axial end of the rotor.

2. Oil conducting means according to Claim 1, **characterized in that** the outer friction ring (26 / ARR) is configured in one part with a rotor carrier of the rotor of the electric machine (10).

3. Oil conducting means according to either of the preceding claims, **characterized in that** a securing ring (40) for axial positioning of the clutch with respect to the rotor projects in the radial direction, in order to serve as an accumulation element for cooling oil.

4. Oil conducting means according to one of the preceding claims, **characterized in that** a restoring spring of the clutch is configured as a cup spring (34), and **in that** openings (35) are provided on the internal diameter of the cup spring (34) for oil control.

5. Oil conducting means according to one of the preceding claims, **characterized in that** an oil guiding plate (38) is provided on the clutch.

6. Oil conducting means according to Claim 5, **characterized in that** an oil guiding plate (38) is clipped into or welded to the inner friction ring (27 / IRR) or intermediate friction ring (24 / ZRR).

7. Hybrid module with an oil conducting means according to one of the preceding claims.

## Revendications

1. Conduite d'huile d'un module hybride pour un véhicule, qui est agencée dans une ligne d'entraînement entre une unité d'entraînement, notamment un moteur à combustion interne, et une sortie, une machine électrique (10) étant prévue et un rotor de la machine électrique (10) étant relié à la sortie, un embrayage étant prévu entre l'unité d'entraînement et la machine électrique (10), **caractérisée en ce que** l'embrayage présente des éléments de guidage d'huile (35, 38, 44) afin d'alimenter la machine électrique (10) en huile de refroidissement, **en ce que** l'embrayage est configuré sous la forme d'un embrayage conique, **en ce que** l'embrayage conique présente au moins une bague de friction extérieure (26/ARR) et une bague de friction intermédiaire (24/ZRR), **en ce que** la bague de friction extérieure (26/ARR) est reliée au rotor, et **en ce que** le cône de l'embrayage conique, à l'état ouvert, forme une conduite d'huile vers une extrémité axiale du rotor,
et **en ce que** des alésages (44) sont prévus sur la bague de friction extérieure (26/ARR) sur le côté effilé du cône, afin de guider de l'huile de refroidissement vers l'autre extrémité axiale du rotor.

2. Conduite d'huile selon la revendication 1, **caractérisée en ce que** la bague de friction extérieure (26/ARR) est configurée d'une seule pièce avec un support de rotor du rotor de la machine électrique (10).

3. Conduite d'huile selon l'une quelconque des revendications précédentes, **caractérisée en ce qu'**un circlip (40) pour le positionnement axial de l'embrayage par rapport au rotor fait saillie dans la direction radiale, afin de servir d'élément de retenue pour l'huile de refroidissement.

4. Conduite d'huile selon l'une quelconque des revendications précédentes, **caractérisée en ce qu'**un ressort de rappel de l'embrayage est configuré sous forme de rondelle-ressort (34) et **en ce que** des ouvertures (35) sont prévues sur le diamètre intérieur de la rondelle-ressort (34) pour la commande de l'huile.

5. Conduite d'huile selon l'une quelconque des revendications précédentes, **caractérisée en ce qu'**une tôle de guidage d'huile (38) est prévue sur l'embrayage.

6. Conduite d'huile selon la revendication 5, **caractérisée en ce que** la tôle de guidage d'huile (38) est accrochée ou soudée à la bague de friction intérieure (27/IRR) ou à la bague de friction intermédiaire (24/ZRR).

7. Module hybride comprenant une conduite d'huile selon l'une quelconque des revendications précédentes.
